# EUROPEAN PATENT SPECIFICATION

(11) **EP 3 139 234 B1**
(45) Date of publication and mention of the grant of the patent: **19.02.2020**
(21) Application number: 16185869.1
(22) Date of filing: 26.08.2016
(51) Int. Cl.: G05B 23/02

(54) **DEVICE SYSTEM, INFORMATION PROCESSING DEVICE, AND OPERATION PROPOSAL METHOD**
VORRICHTUNGSSYSTEM, INFORMATIONSVERARBEITUNGSVORRICHTUNG, INFORMATIONSVERARBEITUNGSSYSTEM UND BETRIEBSVORSCHLAGSVERFAHREN
SYSTÈME DE DISPOSITIF, DISPOSITIF DE TRAITEMENT DE L'INFORMATION ET PROCÉDÉ DE PROPOSITION DE FONCTIONNEMENT

(30) Priority: 02.09.2015 JP 2015172726
(43) Date of publication of application: 08.03.2017
(73) Proprietor: Yokogawa Electric Corporation, Tokyo 180-8750 (JP)
(72) Inventor: Yokochi, Yutaka, Tokyo (JP)
(74) Representative: Henkel & Partner mbB

(56) References cited:
- EP-A2- 0 280 553
- EP-A2- 2 677 383
- US-A1- 2007 100 583
- US-A1- 2012 004 952
- US-A1- 2012 078 387

## Description

### BACKGROUND

### Technical Fields

The disclosure relates to a device system, an information processing device, and an operation proposal method.

Priority is claimed on Japanese Patent Application No. 2015-172726, filed September 2, 2015.

### Related Art

In a plant and a factory (hereinafter, called simply "plant" as a generic name of them), a DCS (Distributed Control System) is established, and an advanced automatic operation is implemented. In the distributed control system, field devices (for example, a measurement device, a manipulation device, a display device, an alarm device, and other devices) and a control device controlling the field devices are connected to each other through a network. Process data which is necessary for a process control is transmitted and received between the controller and the field device.

If an abnormality occurs in the plant, a plant worker needs to perform suitable operation in accordance with a state of the plant. For example, a plant operation support device which diagnoses a plant based on process data obtained from the plant, and displays operation guidance for coping with the abnormality based on information obtained by the diagnosis, is disclosed in Japanese Unexamined Patent Application Publication No. H5-151484.

However, when an abnormality occurs in the plant and the plant worker checks a field device, there is a problem that a work quality differs in accordance with the worker's knowledge and experience. For example, if the worker has a little knowledge and a little experience, the worker may overlook a slight abnormality which has occurred in the plant or may forget to perform operation which should be performed. The plant operation support device, which is disclosed in Japanese Unexamined Patent Application Publication No. H5-151484, cannot prevent a variation of the work quality.

US 2007/100583 A1 discloses an equipment inspection support system, equipment inspection support method, and program including maintenance and inspection management unit selecting and transmitting to a terminal device inspection item contents stored in contents storage unit, receiving inspection result data transmitted from terminal device; timing determination unit determining status information acquisition timing by status information acquisition device based on inspection item contents transmitted to terminal device by maintenance and inspection management unit and the inspection result data transmitted from the terminal device; status information acquisition unit collecting status information acquired by the status information acquisition device according to status information acquisition timing determined by timing determination unit; result data control unit creating result data correspondence table associating the inspection result data received by maintenance and inspection management unit and status information collected by the status information acquisition unit; and inspection result storage unit storing inspection result data, status information and result data correspondence table.

### SUMMARY

According to the present invention, there is provided an information processing device as set out in independent claim 1, a device system as set out in claim 4, and an abnormality determining method as set out in independent claim 15. Advantageous developments are defined in the dependent claims.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating a whole configuration of device system 1.
FIG. 2 is a block diagram illustrating a main configuration of the terminal device.
FIG. 3 is a block diagram illustrating a main configuration of the information processing device.
FIG. 4 is a flow chart illustrating a data storing processing performed by the terminal device.
FIG. 5 is a flow chart illustrating a proposal processing of proposing an operation with respect to the terminal device.
FIG. 6 is a flow chart illustrating the proposal processing A.
FIG. 7 is a drawing illustrating an example of a comparison screen displayed on the display of the terminal device.
FIG. 8 is a drawing illustrating an example of an operation history screen after proposal displayed on the display of the information processing device.
FIG. 9 is a flow chart illustrating the proposal processing B.
FIG. 10 is a drawing illustrating an example of a comparison screen displayed on the display of the terminal device.
FIG. 11 is a flow chart illustrating the proposal processing C.
FIG. 12 is a drawing illustrating an example of a comparison screen displayed on the display of the terminal device.
FIG. 13 is a flow chart illustrating the proposal processing D.
FIG. 14 is a drawing illustrating an example of a comparison screen displayed on the display of the terminal device.
FIG. 15 is a flow chart illustrating the proposal processing E.
FIG. 16 is a drawing illustrating an example of a comparison screen displayed on the display of the terminal device.
FIG. 17 is a drawing illustrating an example of the operation historical data of the similar history.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a device system, an information processing device, and an operation proposal method which can improve a work quality of a plant worker in order to find an abnormality of the plant beforehand or early if the plant worker checks a field device.

Hereinafter, a device system, an information processing device, and an operation proposal method will be described with reference to drawings.

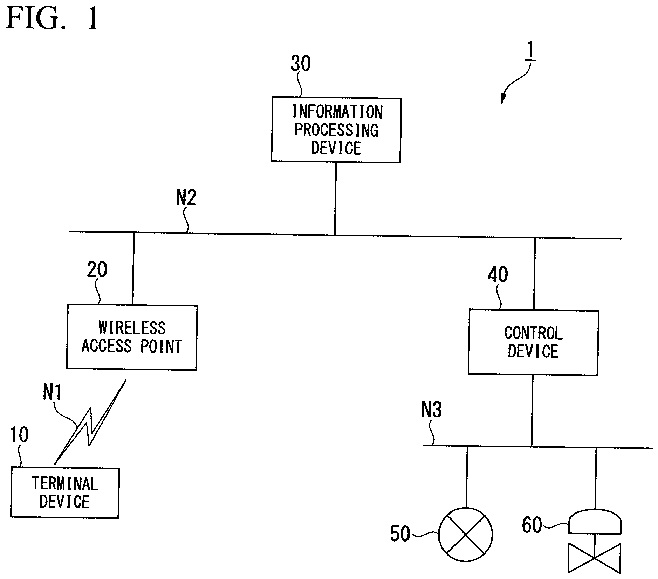

FIG. 1 is a block diagram illustrating a whole configuration of device system 1. As shown in FIG. 1, the device system 1 is equipped with a terminal device 10, a wireless access point 20, an information processing device 30, a control device 40, and field devices 50 and 60.

The terminal device 10 and the wireless access point 20 are connected to each other through the wireless network N1. The wireless access point 20 and the information processing device 30 are connected to the intranet N2. The wireless network N1 is a wireless network which can perform wireless communication in conformity with wireless communication standards, such as Wi-Fi (registered trademark), WiMAX (registered trademark), 3G/LTE (registered trademark), ISA100.11a, WirelessHART (registered trademark), and so on. The intranet N2 is a network such as Ethernet (registered trademark) installed in a monitoring room of the plant.

The plant includes an industrial plant such as a chemical industrial plant, a plant managing and controlling a wellhead (for example, a gas field and an oil field), a plant managing and controlling a generation of electric power (for example, water power, fire power, and nuclear power), a plant managing and controlling a power harvesting (for example, solar power and wind power), a plant managing and controlling water supply and sewerage systems, a dam, and so on.

The field devices 50 and 60 are such as a sensor device (for example, a flowmeter and a temperature sensor), a valve device (for example, a flow control valve and an on-off valve), an actuator device (for example, a fan and a motor), and other devices installed in the plant. The field devices 50 and 60 are devices controlled by the control device 40. The control device 40 and the field devices 50 and 60 are connected to each other through a field network N3.

In an example of FIG. 1, the field device 50 is shown as a flowmeter, and the field device 60 is shown as a valve device. The control device 40 controls an opening/closing operation of the valve device 60 based on flow quantity of fluid flowing in a pipe, which is measured by the flowmeter 50. The field devices 50 and 60 may be a vibration sensor which monitors vibration of a pipe and a valve device, or may be a noise sensor which monitors sound emitted from an actuator device.

The information processing device 30 collects process data (for example, flow quantity of fluid) of the field devices 50 and 60 from the control device 40 through the intranet N2. The information processing device 30 transmits the collected process data to the terminal device 10.

If an abnormality occurs in the plant, the plant worker W investigates a factor of the abnormality. The terminal device 10 is a device used for displaying a check list of field devices which are check targets, and is used by the plant worker W. For example, the terminal device 10 is a tablet computer, a notebook computer, or a smart phone. However, an arbitrary terminal device, which is equipped with functions required for displaying the check list, can be used.

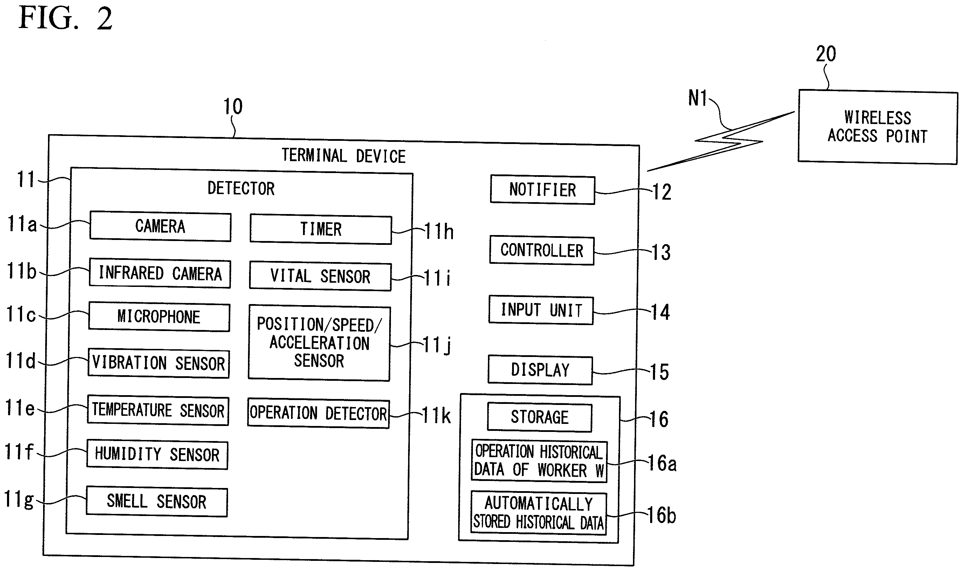

FIG. 2 is a block diagram illustrating a main configuration of the terminal device. As shown in FIG. 2, the terminal device 10 is equipped with a detector 11, a notifier 12, a controller 13, an input unit 14, a display 15, and storage 16.

The detector 11 is equipped with a camera 11a, an infrared camera 11b, a microphone 11c, a vibration sensor 11d, a temperature sensor 11e, a humidity sensor 11f, a smell sensor 11g, a timer 11h, a vital sensor 11i, a position/speed/acceleration sensor 11j, and an operation detector 11k.

The camera 11a is a device for taking an image. The infrared camera 11b is a device for taking an image by using infrared ray. The microphone 11c is a device for detecting surrounding sound. The vibration sensor 11d is a sensor for detecting vibration. The temperature sensor 11e is a sensor for detecting surrounding temperature. The humidity sensor 11f is a device for detecting surrounding humidity. The smell sensor 11g is a sensor for detecting surrounding smell. The timer 11h is a measurement device for managing present time. The vital sensor 11i is a sensor for detecting biological information (for example, heart rate, blood pressure, or perspiration amount) of the plant worker W. The position/speed/acceleration sensor 11j is a sensor for detecting position, speed, and acceleration of the plant worker W. The operation detector 11k is a device for detecting an operation performed by the plant worker W with respect to the terminal device 10.

The notifier 12 notifies data detected by the detector 11 to the information processing device 30 through the wireless access point 20. The data detected by the detector 11 is at least one of data representing an operation performed by the plant worker W with respect to the terminal device 10, data representing an environmental value of the plant, and data representing biological information of the plant worker W. The controller 13 is equipped with a processor such as CPU (Central Processing Unit), and a memory which stores a program executed by the processor. The controller 13 may be hardware, such as LSI (Large Scale Integration), ASIC (Application Specific Integrated Circuit), or the like.

For example, the input unit 14 is a touchpad which receives an input from the plant worker W. If an abnormality occurs in the plant, the plant worker W instructs to display a check list by using the input unit 14. The plant worker W can input a check result by using the input unit 14, take an image by using the camera 11a or the infrared camera 11b, measure vibration by using the vibration sensor 11d, and so on.

For example, the display 15 is a liquid crystal display, an organic EL (Electro Luminescence) display, or the like. The display 15 displays a check list of field devices, an input screen of a check result, a map of the plant, data of field devices, an operation screen of each sensor prepared in the detector 11, and so on.

The storage 16 stores current operation historical data 16a of the worker W, and automatically stored historical data 16b. The automatically stored historical data 16b is historical data in which data representing environmental values of the plant or biological information of the worker W is accumulated. If the terminal device 10 receives the process data of the field devices 50 and 60 from the information processing device 30, the storage 16 stores the process data. The notifier 12 notifies the operation historical data 16a of the worker W, the automatically stored historical data 16b, and the process data, to the information processing device 30 through the wireless access point 20.

Although the detector 11 is built in the terminal device 10, the detector 11 may be prepared in another detecting device which is different from the terminal device 10. In this case, the data detected by the detector 11 may be transmitted from the detecting device to the terminal device 10 by a short-distance wireless communication, such as Bluetooth (registered trademark).

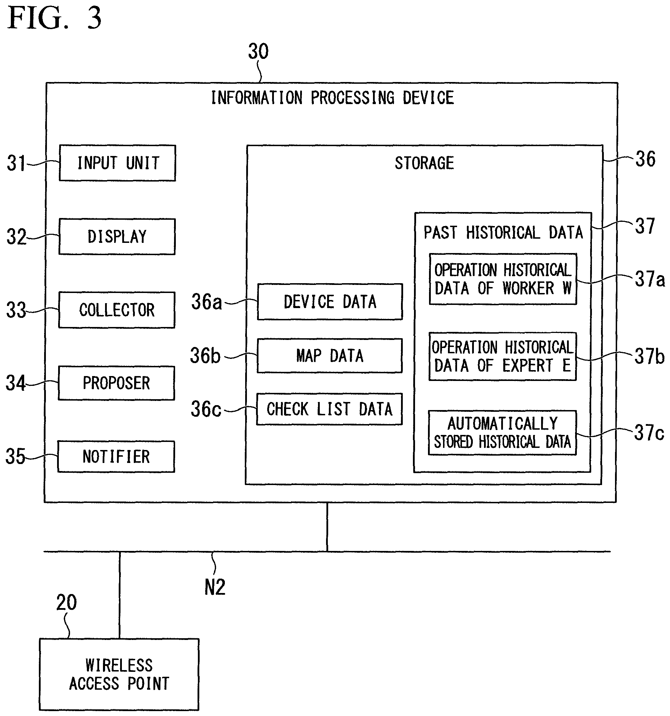

FIG. 3 is a block diagram illustrating a main configuration of the information processing device. As shown in FIG. 3, the information processing device 30 is equipped with an input unit 31, a display 32, a collector 33, a proposer 34, a notifier 35, and storage 36. The input unit 31 is an input unit, such as a keyboard and a mouse. For example, the display 32 is a liquid crystal display, an organic EL (Electro Luminescence) display, or the like. The collector 33 collects data notified from the notifier 12 of the terminal device 10. For example, the data notified from the notifier 12 is the operation historical data 16a of the worker W, the automatically stored historical data 16b, and process data.

The proposer 34 proposes an operation which the plant worker W should perform with respect to the terminal device 10 based on the data collected by the collector 33. Details of the proposal processing performed by the proposer 34 will be described later. The notifier 35 notifies the contents proposed by the proposer 34 to the terminal device 10 through the wireless access point 20.

The storage 36 stores device data 36a, map data 36b, check list data 36c, and past historical data 37. The device data 36a is data representing information of a model and an installation position of the field device installed in the plant. The map data 36b is data representing a map in the plant. The check list data 36c is data representing a list of the field devices which should be checked by the worker W, and data representing an operation item of the each field device. The past historical data 37 includes past operation historical data 37a of the worker W with respect to the terminal device 10, past operation historical data 37b of an expert E with respect to the terminal device 10, and historical data 37c automatically stored in the past by the detector 11.

The information processing device 30 is equipped with a calculation circuit such as CPU (Central Processing Unit). The CPU executes a program installed in the information processing device 30 (computer) in order to implement functions of the collector 33, proposer 34, and so on. These functions may be implemented by hardware, such as LSI, ASIC, or the like.

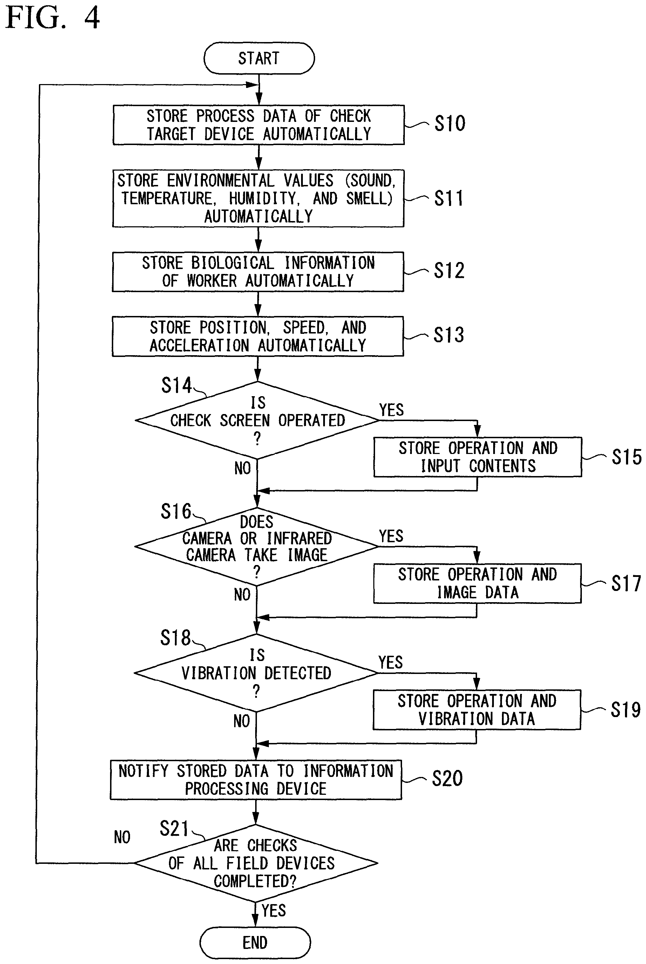

FIG. 4 is a flow chart illustrating a data storing processing performed by the terminal device. The control device 40 shown in FIG. 1 transmits process data (for example, flow quantity of fluid) of the field devices 50 and 60 to the information processing device 30. The notifier 35 of the information processing device 30 notifies the process data, which has been received from the control device 40, to the terminal device 10 through the wireless access point 20. The controller 13 of the terminal device 10 stores the process data, which has been notified from the information processing device 30, into the storage 16 (Step S10).

Next, the controller 13 automatically stores environmental values (sound, temperature, humidity, and smell) detected by the detector 11 into the storage 16 (Step S11). Specifically, the controller 13 automatically stores, into the storage 16, sound detected by the microphone 11c, temperature detected by the temperature sensor 11e, humidity detected by the humidity sensor 11f, and smell detected by the smell sensor 11g.

Next, the controller 13 automatically stores the biological information (heart rate, blood pressure, or perspiration amount) detected by the detector 11 into the storage 16 (Step S12). Specifically, the controller 13 automatically stores, into the storage 16, the heart rate, the blood pressure, or the perspiration amount, which have been detected by the vital sensor 11i. The controller 13 automatically stores, into the storage 16, position, speed, and acceleration of the plant worker W, which have been detected by the position/speed/acceleration sensor 11j of the detector 11 (Step S13).

Thereafter, the controller 13 determines whether or not the check screen displayed on the display 15 of the terminal device 10 has been operated, based on a detection signal from the operation detector 11k (Step S14). Specifically, the controller 13 determines whether or not the plant worker W has input information including the check result by using the input unit 14.

If the controller 13 has determined that the check screen has been operated (Step S14: YES), the controller 13 stores, into the storage 16, the operation performed by the plant worker W and contents input by the plant worker W (Step S15), and progresses to Step S16. On the other hand, if the controller 13 has not determined that the check screen has operated (Step S14: NO), the controller 13 progresses to Step S16 without performing the processing of Step S15.

Next, the controller 13 determines whether or not an image has been taken by the camera 11a or the infrared camera 11b (Step S16). If the controller 13 has determined that an image has been taken (Step S16: YES), the controller 13 stores the operation performed by the plant worker W and the image data into the storage 16 (Step S17), and progresses to Step S18. On the other hand, if the controller 13 has not determined that an image has been taken (Step S16: NO), the controller 13 progresses to Step S18 without performing the processing of Step S17.

Next, the controller 13 determines whether or not a vibration has been detected by the vibration sensor 11d (Step S18). If the controller 13 has determined that a vibration has been detected (Step S18: YES), the controller 13 stores the operation performed by the plant worker W and the vibration data into the storage 16 (Step S19), and progresses to Step S20. On the other hand, if the controller 13 has not determined that a vibration has been detected (Step S18: NO), the controller 13 progresses to Step S20 without performing the processing of Step S19.

The controller 13 notifies, to the information processing device 30, the operation historical data 16a of the worker W and the automatically stored historical data 16b, which have been stored in the storage 16, by using the notifier 12 (Step S20). Thereafter, the controller 13 determines whether or not the checks of all the field devices displayed on the check list have been completed (Step S21). For example, the controller 13 displays a check list completion key on the display 15. If the check list completion key has been selected by the plant worker W, the controller 13 determines that the checks of all the field devices displayed on the check list have been completed.

If the controller 13 has not determined that the checks of all the field devices displayed on the check list have been completed (Step S21: NO), the controller 13 returns to the processing of Step S10. On the other hand, if the controller 13 has determined that the checks of all the field devices displayed on the check list have been completed (Step S21: YES), the processing of this flow chart is ended.

In Steps S10 to S13, S15, S17, and S19, time data measured by the timer 11h is associated with the data detected by the detector 11, and stored.

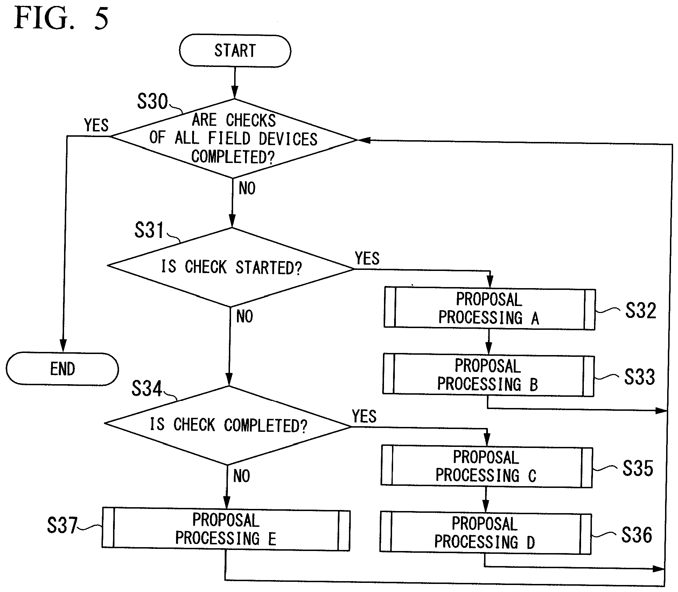

FIG. 5 is a flow chart illustrating a proposal processing of proposing an operation with respect to the terminal device. The proposer 34 of the information processing device 30 determines whether or not checks of all the field devices displayed on the check list have been completed (Step S30). For example, if the check list completion key has been selected by the plant worker W, the notifier 12 of the terminal device 10 notifies a check completion notice to the information processing device 30. If the proposer 34 of the information processing device 30 has received the check completion notice, the proposer 34 determines that checks of all the field devices displayed on the check list have been completed.

If the proposer 34 has determined that checks of all the field devices displayed on the check list have been completed (Step S30: YES), the processing of this flow chart is ended. On the other hand, if the proposer 34 has not determined that checks of all the field devices displayed on the check list have been completed (Step S30: NO), the proposer 34 determines whether or not the plant worker W starts to check a field device (Step S31).

For example, the controller 13 of the terminal device 10 displays a check start key on the display 15. If the check start key has been selected by the plant worker W, the notifier 12 of the terminal device 10 notifies a check start notice to the information processing device 30. If the proposer 34 of the information processing device 30 has received the check start notice, the proposer 34 determines that the plant worker W has started to check a field device.

If the proposer 34 has determined that the plant worker W has started to check a field device (Step S31: YES), the proposer 34 performs proposal processing A (Step S32), and performs proposal processing B (Step S33).

In the proposal processing A, the proposer 34 compares the current operation historical data 16a of the plant worker W, while the plant worker W moves to a check target device, with the past operation historical data 37a of the worker W, and the proposer 34 proposes an operation which should be performed with respect to the terminal device 10. Details of the proposal processing A will be described later.

In the proposal processing B, the proposer 34 compares the current operation historical data 16a of the plant worker W, while the plant worker W moves to a check target device, with the past operation historical data 37b of the expert E, and the proposer 34 proposes an operation which should be performed with respect to the terminal device 10. Details of the proposal processing B will be described later. If the proposal processing A and the proposal processing B has been completed, the proposer 34 returns to the processing of Step S30.

On the other hand, if the proposer 34 has not determined that the plant worker W has started to check a field device (Step S31: NO), the proposer 34 determines whether or not the plant worker W has completed the check of the field device (Step S34).

For example, the controller 13 of the terminal device 10 displays a check completion key on the display 15. If the check completion key has been selected by the plant worker W, the notifier 12 of the terminal device 10 notifies a check completion notice to the information processing device 30. If the proposer 34 of the information processing device 30 has received the check completion notice, the proposer 34 determines that the plant worker W has completed the check of the field device.

If the proposer 34 has determined that the plant worker W has completed the check of the field device (Step S34: YES), the proposer 34 performs proposal processing C (Step S35), and performs proposal processing D (Step S36).

In the proposal processing C, the proposer 34 compares the current operation historical data 16a of the plant worker W, while the plant worker W checks the check target device, with the past operation historical data 37a of the worker W, and the proposer 34 proposes an operation which should be performed with respect to the terminal device 10. Details of the proposal processing C will be described later.

In the proposal processing D, the proposer 34 compares the current operation historical data 16a of the plant worker W, while the plant worker W checks the check target device, with the past operation historical data 37b of the expert E, and the proposer 34 proposes an operation which should be performed with respect to the terminal device 10. Details of the proposal processing D will be described later. If the proposal processing C and the proposal processing D has been completed, the proposer 34 returns to the processing of Step S30. On the other hand, if the proposer 34 has not determined that the plant worker W has completed the check of the field device (Step S34: NO), the proposer 34 performs proposal processing E (Step S37).

In the proposal processing E, the proposer 34 compares the automatically stored current historical data 16b with the automatically stored past historical data 37c, and the proposer 34 proposes an operation which should be performed with respect to the terminal device 10. The automatically stored historical data is data such as an environmental value of the plant detected by the detector 11 or data representing biological information of the worker W. Details of the proposal processing E will be described later. If the proposal processing E has been completed, the proposer 34 returns to the processing of Step S30.

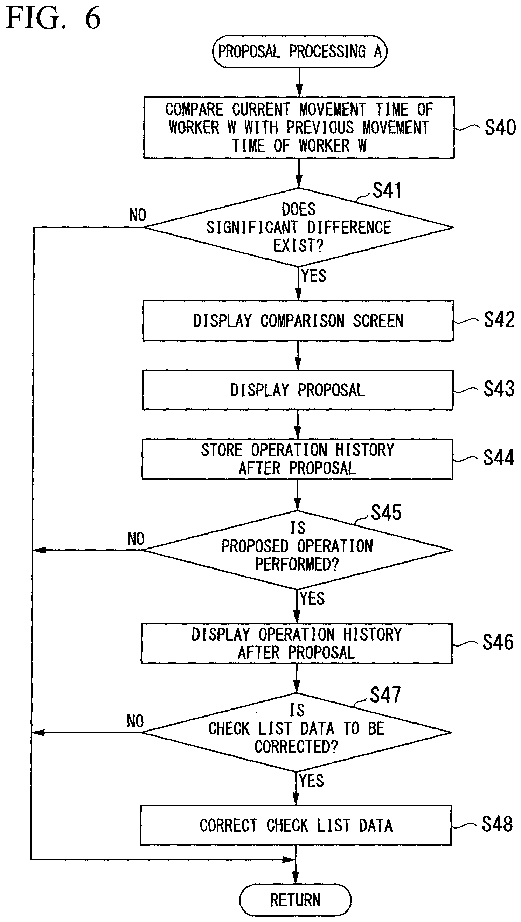

FIG. 6 is a flow chart illustrating the proposal processing A. FIG. 6 is a drawing illustrating the proposal processing A of Step S32 shown in FIG. 5 in detail. The flow chart shown in FIG. 6 is processing for comparing an operation performed currently by the plant worker W with an operation performed previously by the plant worker W, and for proposing an operation which should be performed by the plant worker W, when the plant worker W moves between field devices which are check targets.

The proposer 34 obtains the current operation historical data 16a of the worker W collected by the collector 33 and the previous operation historical data 37a of the worker W stored in the storage 36. Then, the proposer 34 compares a current movement time of the worker W with a previous movement time of the worker W based on the obtained operation historical data 16a and 37a (Step S40).

The movement time is time required for the worker W to move from a field device to a next field device. Specifically, the movement time is time from when the worker W selects the check completion key for completing a check of a field device to when the worker W selects the check start key for starting a check of a next field device.

Next, the proposer 34 determines whether or not a significant difference exists between the current movement time of the worker W and the previous movement time of the worker W (Step S41). For example, if a difference between the current movement time of the worker W and the previous movement time of the worker W is equal to or more than a predetermined time, the proposer 34 determines that a significant difference exists. The predetermined time is a value which has been set beforehand.

If the proposer 34 has not determined that a significant difference exists (Step S41: NO), the processing of this flow chart is ended. On the other hand, if the proposer 34 has determined that a significant difference exists (Step S41: YES), the proposer 34 generates comparison screen data and proposal data representing an operation which should be performed with respect to the terminal device 10. Thereafter, the notifier 35 notifies the comparison screen data and the proposal data, which have been generated, to the terminal device 10 through the wireless access point 20.

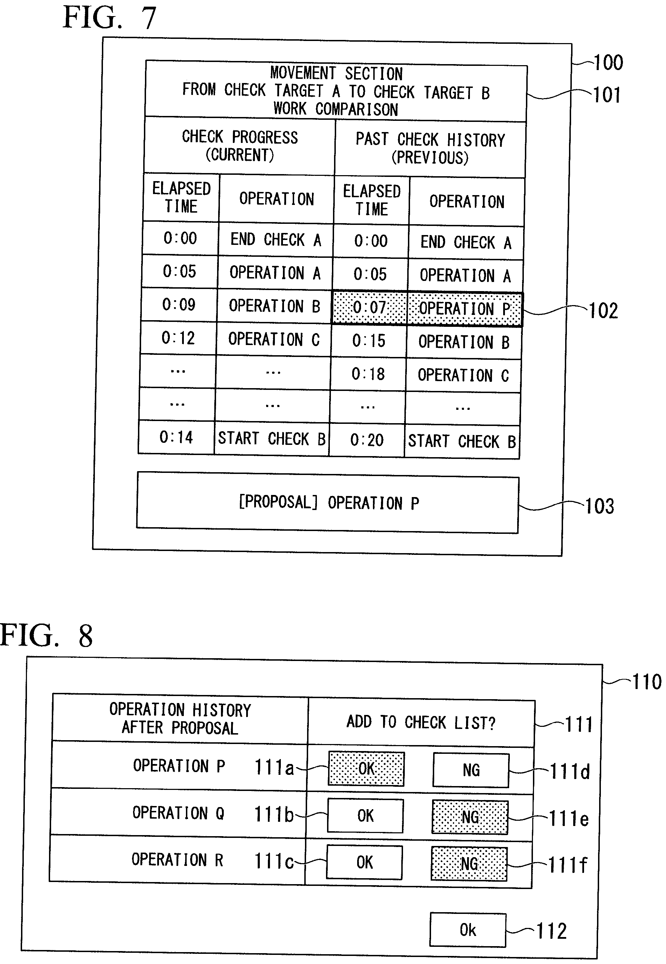

FIG. 7 is a drawing illustrating an example of a comparison screen displayed on the display of the terminal device. As shown in FIG. 7, if the terminal device 10 has received the comparison screen data and the proposal data, the display 15 of the terminal device 10 displays a comparison screen 100 based on the comparison screen data (Step S42). A comparison table 101 is displayed in the comparison screen 100. The comparison table 101 includes the current operation historical data of the worker W and the previous operation historical data of the worker W within a movement section from a check target A to a check target B.

As shown in FIG. 7, in the previous operation historical data of the worker W, the operation P was performed 7 minutes after the check for the check target A was completed. However, in the current operation historical data of the worker W, the operation P was not performed. For this reason, as shown by the reference sign 102, the display 15 emphasizes and displays a difference between the current operation historical data of the worker W and the previous operation historical data of the worker W. Thereby, the worker W can easily understand the difference between current time and previous time.

As shown by the reference sign 103, the display 15 displays the contents proposed by the proposer 34 based on the proposal data notified from the information processing device 30 (Step S43). In the example of FIG. 7, since there is a possibility that the worker W has forgot to perform the operation P, the operation P is displayed as a proposal. If the worker W has forgot to perform the operation P, the worker W returns the route that the worker W has moved and performs the operation P. Thereby, a work quality of the worker W can be improved in order to find an abnormality of the plant beforehand or early.

Thereafter, the controller 13 of the terminal device 10 detects an operation history after proposal by using the operation detector 11k, and stores the detected operation history into the storage 16 (Step S44). The notifier 12 notifies the operation history after proposal, which has been stored in the storage 16, to the information processing device 30 through the wireless access point 20.

The proposer 34 of the information processing device 30 determines whether or not the worker W performed the proposed operation, based on the operation history after proposal notified by the notifier 12 (Step S45). If the proposer 34 has not determined that the worker W performed the proposed operation (Step S45: NO), the processing of this flow chart is ended. On the other hand, if the proposer 34 has determined that the worker W performed the proposed operation (Step S45: YES), the proposer 34 displays the operation history after proposal on the display 32 of the information processing device 30 (Step S46).

FIG. 8 is a drawing illustrating an example of an operation history screen after proposal displayed on the display of the information processing device. As shown in FIG. 8, the display 32 displays the operation history screen 110 after proposal. An operation history list 111 and an Ok key 112 are displayed in the operation history screen 110.

The operation history after proposal (the operation P, the operation Q, and the operation R) performed by the plant worker W is displayed in the operation history list 111. A key 111a for adding the operation P to the check list data 36c, a key 111d for not adding the operation P to the check list data 36c, a key 111b for adding the operation Q to the check list data 36c, a key 111e for not adding the operation Q to the check list data 36c, a key 111c for adding the operation R to the check list data 36c, and a key 111f for not adding the operation R to the check list data 36c are displayed in the operation history screen 110.

Next, the proposer 34 determines whether the check list data 36c is to be corrected or not (Step S47). If the proposer 34 has not determined that the check list data 36c is to be corrected (Step S47: NO), the processing of this flow chart is ended. On the other hand, if the proposer 34 has determined that the check list data 36c is to be corrected (Step S47: YES), the proposer 34 corrects the check list data 36c (Step S48).

Specifically, if the OK key 112 has been selected after the key 111a was selected, the proposer 34 adds the operation P to the operation item in the check list data 36c. If the OK key 112 has been selected after the key 111b was selected, the proposer 34 adds the operation Q to the operation item in the check list data 36c. If the OK key 112 has been selected after the key 111c was selected, the proposer 34 adds the operation R to the operation item in the check list data 36c. If the correction of the check list data 36c has been completed, the proposer 34 ends the processing of this flow chart.

Thus, it is allowed to select whether or not the operation after proposal performed by the plant worker W is added to the check list data 36c. Thereby, the check list data 36c is improvable. However, it is not allowed for the terminal device 10 to select whether or not the operation after proposal is added to the check list data 36c. This is to prevent the plant worker W from correcting the check list data 36c in accordance with individual judgment.

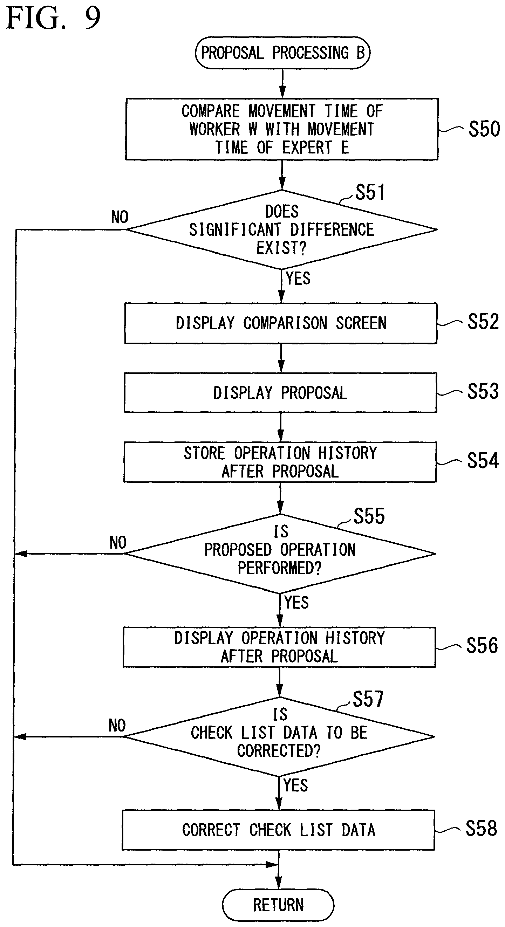

FIG. 9 is a flow chart illustrating the proposal processing B. FIG. 9 is a drawing illustrating the proposal processing B of Step S33 shown in FIG. 5 in detail. The flow chart shown in FIG. 9 is processing for comparing a current operation performed by the plant worker W with a past operation performed by an expert E, and for proposing an operation which should be performed by the plant worker W, when the plant worker W moves between field devices which are check targets.

The proposer 34 obtains the current operation historical data 16a of the worker W collected by the collector 33 and the past operation historical data 37b of the expert E stored in the storage 36. Then, the proposer 34 compares a current movement time of the worker W with a past movement time of the expert E based on the obtained operation historical data 16a and 37b (Step S50).

Next, the proposer 34 determines whether or not a significant difference exists between the current movement time of the worker W and the past movement time of the expert E (Step S51). For example, if a difference between the current movement time of the worker W and the past movement time of the expert E is equal to or more than a predetermined time, the proposer 34 determines that a significant difference exists. The predetermined time is a value which has been set beforehand.

If the proposer 34 has not determined that a significant difference exists (Step S51: NO), the processing of this flow chart is ended. On the other hand, if the proposer 34 has determined that a significant difference exists (Step S51: YES), the proposer 34 generates comparison screen data and proposal data representing an operation which should be performed with respect to the terminal device 10. Thereafter, the notifier 35 notifies the comparison screen data and the proposal data, which have been generated, to the terminal device 10 through the wireless access point 20.

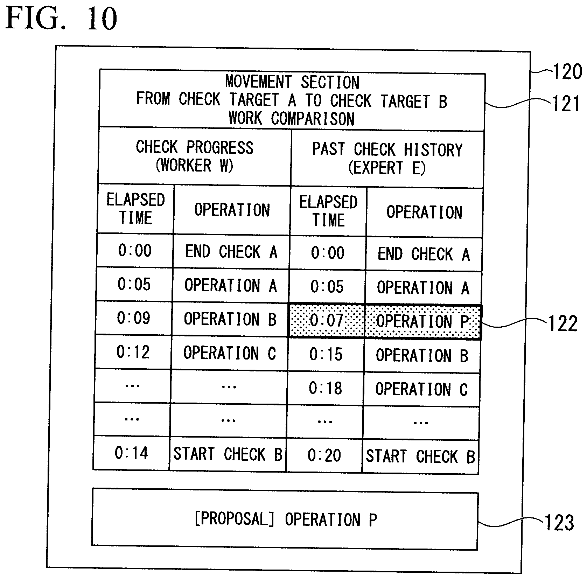

FIG. 10 is a drawing illustrating an example of a comparison screen displayed on the display of the terminal device. As shown in FIG. 10, if the terminal device 10 has received the comparison screen data and the proposal data, the display 15 of the terminal device 10 displays a comparison screen 120 based on the comparison screen data (Step S52). A comparison table 121 is displayed in the comparison screen 120. The comparison table 121 includes the current operation historical data of the worker W and the past operation historical data of the expert E within a movement section from a check target A to a check target B.

As shown in FIG. 10, in the past operation historical data of the expert E, the operation P was performed 7 minutes after the check for the check target A was completed. However, in the current operation historical data of the worker W, the operation P was not performed. For this reason, as shown by the reference sign 122, the display 15 emphasizes and displays a difference between the current operation historical data of the worker W and the past operation historical data of the expert E. Thereby, the worker W can easily understand the difference between the operation by the worker W and the operation by the expert E.

As shown by the reference sign 123, the display 15 displays the contents proposed by the proposer 34 based on the proposal data notified from the information processing device 30 (Step S53). In the example of FIG. 10, since there is a possibility that the worker W has forgot to perform the operation P, the operation P is displayed as a proposal. If the worker W has forgot to perform the operation P, the worker W returns the route that the worker W has moved and performs the operation P. Thereby, a work quality of the worker W can be improved in order to find an abnormality of the plant beforehand or early. Moreover, even if the worker W has a little knowledge and a little experience, a work quality which is the same as that of the expert E can be achieved.

Thereafter, the controller 13 of the terminal device 10 detects an operation history after proposal by using the operation detector 11k, and stores the detected operation history into the storage 16 (Step S54). The notifier 12 notifies the operation history after proposal, which has been stored in the storage 16, to the information processing device 30 through the wireless access point 20.

The proposer 34 of the information processing device 30 determines whether or not the worker W performed the proposed operation, based on the operation history after proposal notified by the notifier 12 (Step S55). If the proposer 34 has not determined that the worker W performed the proposed operation (Step S55: NO), the processing of this flow chart is ended. On the other hand, if the proposer 34 has determined that the worker W performed the proposed operation (Step S55: YES), the proposer 34 displays the operation history after proposal on the display 32 of the information processing device 30 (Step S56). Since the operation history screen after proposal which is to be displayed and instructions for correcting the check list data 36c which are to be performed in the operation history screen are the same as that of FIG. 8, the explanation is omitted.

Next, the proposer 34 determines whether the check list data 36c is to be corrected or not (Step S57). If the proposer 34 has not determined that the check list data 36c is to be corrected (Step S57: NO), the processing of this flow chart is ended. On the other hand, if the proposer 34 has determined that the check list data 36c is to be corrected (Step S57: YES), the proposer 34 corrects the check list data 36c (Step S58).

Thus, it is allowed to select whether or not the operation after proposal performed by the plant worker W is added to the check list data 36c. Thereby, the check list data 36c is improvable. However, it is not allowed for the terminal device 10 to select whether or not the operation after proposal is added to the check list data 36c. This is to prevent the plant worker W from correcting the check list data 36c in accordance with individual judgment.

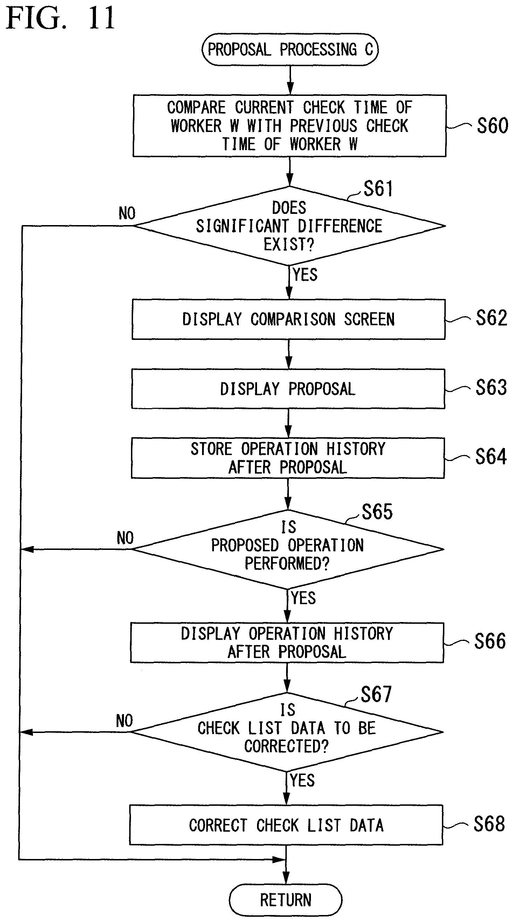

FIG. 11 is a flow chart illustrating the proposal processing C. FIG. 11 is a drawing illustrating the proposal processing C of Step S35 shown in FIG. 5 in detail. The flow chart shown in FIG. 11 is processing for comparing an operation performed currently by the plant worker W with an operation performed previously by the plant worker W, and for proposing an operation which should be performed by the plant worker W, when the plant worker W checks a field device which is a check target.

The proposer 34 obtains the current operation historical data 16a of the worker W collected by the collector 33 and the previous operation historical data 37a of the worker W stored in the storage 36. Then, the proposer 34 compares a current check time of the worker W with a previous check time of the worker W based on the obtained operation historical data 16a and 37a (Step S60).

Next, the proposer 34 determines whether or not a significant difference exists between the current check time of the worker W and the previous check time of the worker W (Step S61). For example, if a difference between the current check time of the worker W and the previous check time of the worker W is equal to or more than a predetermined time, the proposer 34 determines that a significant difference exists. The predetermined time is a value which has been set beforehand.

If the proposer 34 has not determined that a significant difference exists (Step S61: NO), the processing of this flow chart is ended. On the other hand, if the proposer 34 has determined that a significant difference exists (Step S61: YES), the proposer 34 generates comparison screen data and proposal data representing an operation which should be performed with respect to the terminal device 10. Thereafter, the notifier 35 notifies the comparison screen data and the proposal data, which have been generated, to the terminal device 10 through the wireless access point 20.

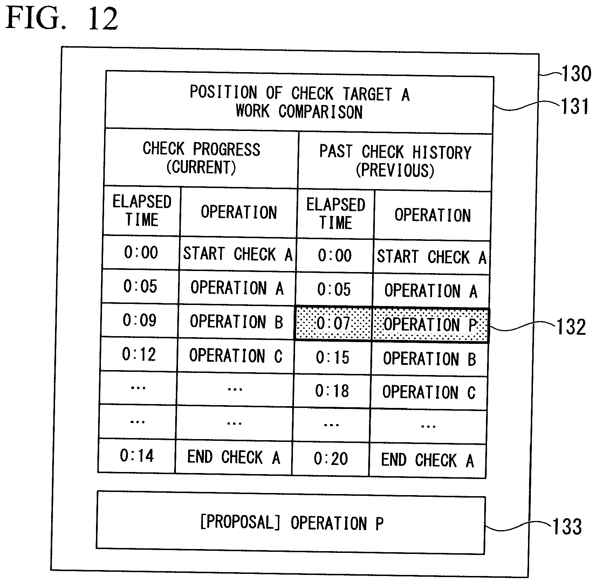

FIG. 12 is a drawing illustrating an example of a comparison screen displayed on the display of the terminal device. As shown in FIG. 12, if the terminal device 10 has received the comparison screen data and the proposal data, the display 15 of the terminal device 10 displays a comparison screen 130 based on the comparison screen data (Step S62). A comparison table 131 is displayed in the comparison screen 130. The comparison table 131 includes the current operation historical data of the worker W and the previous operation historical data of the worker W while a check target A is checked.

As shown in FIG. 12, in the previous operation historical data of the worker W, the operation P was performed 7 minutes after the check for the check target A was started. However, in the current operation historical data of the worker W, the operation P was not performed. For this reason, as shown by the reference sign 132, the display 15 emphasizes and displays a difference between the current operation historical data of the worker W and the previous operation historical data of the worker W. Thereby, the worker W can easily understand the difference between current time and previous time.

As shown by the reference sign 133, the display 15 displays the contents proposed by the proposer 34 based on the proposal data notified from the information processing device 30 (Step S63). In the example of FIG. 12, since there is a possibility that the worker W has forgot to perform the operation P, the operation P is displayed as a proposal. If the worker W has forgot to perform the operation P, the worker W returns the route that the worker W has moved and performs the operation P. Thereby, a work quality of the worker W can be improved in order to find an abnormality of the plant beforehand or early.

Thereafter, the controller 13 of the terminal device 10 detects an operation history after proposal by using the operation detector 11k, and stores the detected operation history into the storage 16 (Step S64). The notifier 12 notifies the operation history after proposal, which has been stored in the storage 16, to the information processing device 30 through the wireless access point 20.

The proposer 34 of the information processing device 30 determines whether or not the worker W performed the proposed operation, based on the operation history after proposal notified by the notifier 12 (Step S65). If the proposer 34 has not determined that the worker W performed the proposed operation (Step S65: NO), the processing of this flow chart is ended. On the other hand, if the proposer 34 has determined that the worker W performed the proposed operation (Step S65: YES), the proposer 34 displays the operation history after proposal on the display 32 of the information processing device 30 (Step S66). Since the operation history screen after proposal which is to be displayed and instructions for correcting the check list data 36c which is to be performed in the operation history screen are the same as that of FIG. 8, the explanation is omitted.

Next, the proposer 34 determines whether the check list data 36c is to be corrected or not (Step S67). If the proposer 34 has not determined that the check list data 36c is to be corrected (Step S67: NO), the processing of this flow chart is ended. On the other hand, if the proposer 34 has determined that the check list data 36c is to be corrected (Step S67: YES), the proposer 34 corrects the check list data 36c (Step S68).

Thus, it is allowed to select whether or not the operation after proposal performed by the plant worker W is added to the check list data 36c. Thereby, the check list data 36c is improvable. However, it is not allowed for the terminal device 10 to select whether or not the operation after proposal is added to the check list data 36c. This is to prevent the plant worker W from correcting the check list data 36c in accordance with individual judgment.

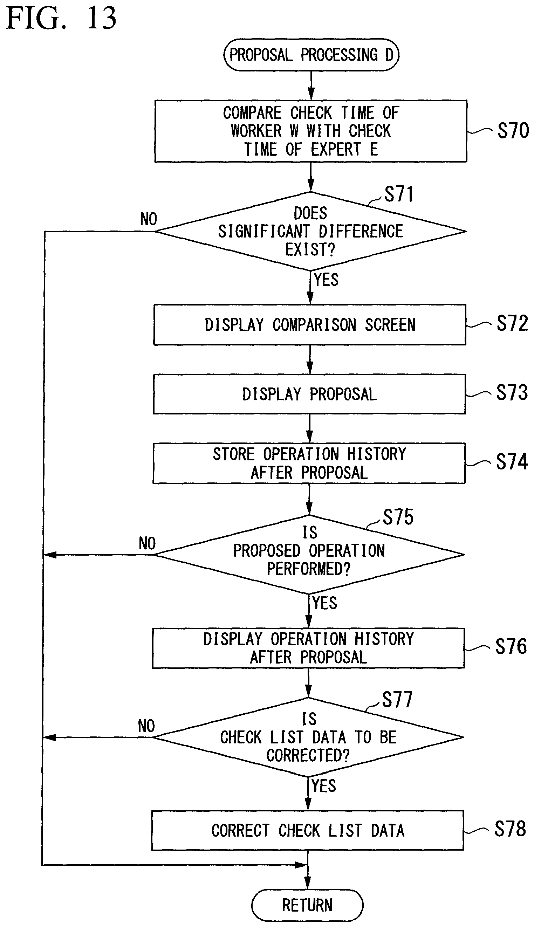

FIG. 13 is a flow chart illustrating the proposal processing D. FIG. 13 is a drawing illustrating the proposal processing D of Step S36 shown in FIG. 5 in detail. The flow chart shown in FIG. 13 is processing for comparing a current operation performed by the plant worker W with a past operation performed by an expert E, and for proposing an operation which should be performed by the plant worker W, when the plant worker W checks a field device which is a check target.

The proposer 34 obtains the current operation historical data 16a of the worker W collected by the collector 33 and the past operation historical data 37b of the expert E stored in the storage 36. Then, the proposer 34 compares a current check time of the worker W with a past check time of the expert E based on the obtained operation historical data 16a and 37b (Step S70).

Next, the proposer 34 determines whether or not a significant difference exists between the current check time of the worker W and the past check time of the expert E (Step S71). For example, if a difference between the current check time of the worker W and the past check time of the expert E is equal to or more than a predetermined time, the proposer 34 determines that a significant difference exists. The predetermined time is a value which has been set beforehand.

If the proposer 34 has not determined that a significant difference exists (Step S71: NO), the processing of this flow chart is ended. On the other hand, if the proposer 34 has determined that a significant difference exists (Step S71: YES), the proposer 34 generates comparison screen data and proposal data representing an operation which should be performed with respect to the terminal device 10. Thereafter, the notifier 35 notifies the comparison screen data and the proposal data, which have been generated, to the terminal device 10 through the wireless access point 20.

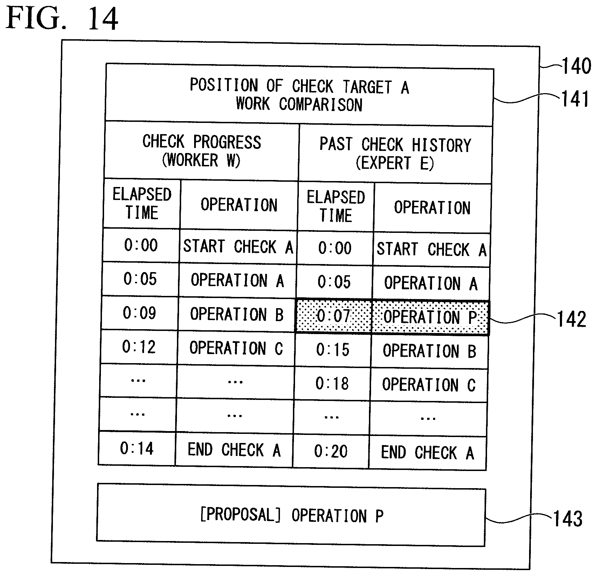

FIG. 14 is a drawing illustrating an example of a comparison screen displayed on the display of the terminal device. As shown in FIG. 14, if the terminal device 10 has received the comparison screen data and the proposal data, the display 15 of the terminal device 10 displays a comparison screen 140 based on the comparison screen data (Step S72). A comparison table 141 is displayed in the comparison screen 140. The comparison table 141 includes the current operation historical data of the worker W and the past operation historical data of the expert E while a check target A is checked.

As shown in FIG. 14, in the past operation historical data of the expert E, the operation P was performed 7 minutes after the check for the check target A was started. However, in the current operation historical data of the worker W, the operation P was not performed. For this reason, as shown by the reference sign 142, the display 15 emphasizes and displays a difference between the current operation historical data of the worker W and the past operation historical data of the expert E. Thereby, the worker W can easily understand the difference between the operation by the worker W and the operation by the expert E.

As shown by the reference sign 143, the display 15 displays the contents proposed by the proposer 34 based on the proposal data notified from the information processing device 30 (Step S73). In the example of FIG. 14, since there is a possibility that the worker W has forgot to perform the operation P, the operation P is displayed as a proposal. If the worker W has forgot to perform the operation P, the worker W returns the route that the worker W has moved and performs the operation P. Thereby, a work quality of the worker W can be improved in order to find an abnormality of the plant beforehand or early. Moreover, even if the worker W has a little knowledge and a little experience, a work quality which is the same as that of the expert E can be achieved.

Thereafter, the controller 13 of the terminal device 10 detects an operation history after proposal by using the operation detector 11k, and stores the detected operation history into the storage 16 (Step S74). The notifier 12 notifies the operation history after proposal, which has been stored in the storage 16, to the information processing device 30 through the wireless access point 20.

The proposer 34 of the information processing device 30 determines whether or not the worker W performed the proposed operation, based on the operation history after proposal notified by the notifier 12 (Step S75). If the proposer 34 has not determined that the worker W performed the proposed operation (Step S75: NO), the processing of this flow chart is ended. On the other hand, if the proposer 34 has determined that the worker W performed the proposed operation (Step S75: YES), the proposer 34 displays the operation history after proposal on the display 32 of the information processing device 30 (Step S76). Since the operation history screen after proposal which is to be displayed and instructions for correcting the check list data 36c which are to be performed in the operation history screen are the same as that of FIG. 8, the explanation is omitted.

Next, the proposer 34 determines whether the check list data 36c is to be corrected or not (Step S77). If the proposer 34 has not determined that the check list data 36c is to be corrected (Step S77: NO), the processing of this flow chart is ended. On the other hand, if the proposer 34 has determined that the check list data 36c is to be corrected (Step S77: YES), the proposer 34 corrects the check list data 36c (Step S78).

Thus, it is allowed to select whether or not the operation after proposal performed by the plant worker W is added to the check list data 36c. Thereby, the check list data 36c is improvable. However, it is not allowed for the terminal device 10 to select whether or not the operation after proposal is added to the check list data 36c. This is to prevent the plant worker W from correcting the check list data 36c in accordance with individual judgment.

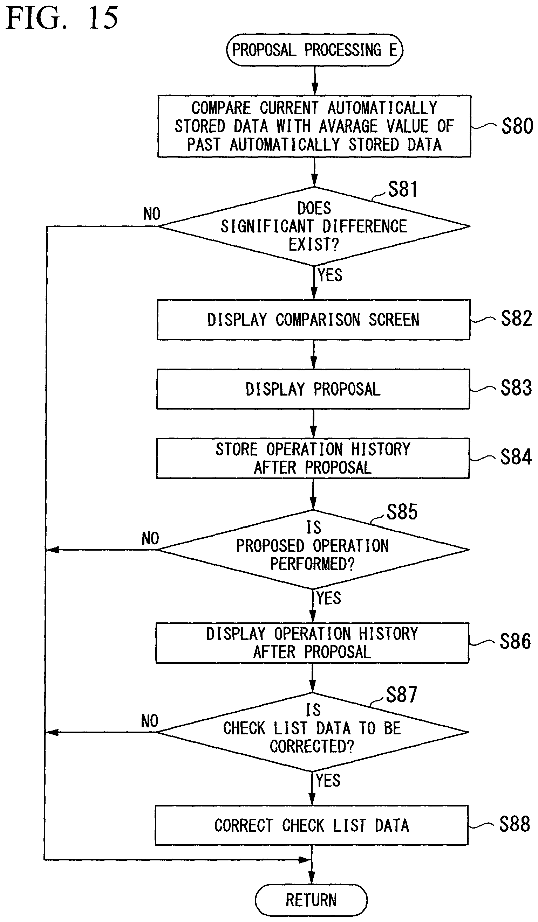

FIG. 15 is a flow chart illustrating the proposal processing E. FIG. 15 is a drawing illustrating the proposal processing E of Step S37 shown in FIG. 5 in detail. The flow chart shown in FIG. 15 is processing for comparing current data detected by the detector 11 with an average value of past data detected by the detector 11, and for proposing an operation which should be performed by the plant worker W.

The proposer 34 obtains the current historical data 16b detected by the detector 11 and the past historical data 37c detected by the detector 11. The historical data 16b and 37c are historical data in which the data representing environmental values of the plant or biological information of the worker W is accumulated. The proposer 34 calculates an average value Ave of the historical data 37c detected in the past. Then, the proposer 34 compares the currently detected historical data 16b with the average value Ave of the past historical data 37c (Step S80).

Next, the proposer 34 determines whether or not a significant difference exists between the currently detected historical data 16b and the average value Ave of the past historical data 37c (Step S81). For example, if a difference between the currently detected historical data 16b and the average value Ave is equal to or more than a predetermined value, the proposer 34 determines that a significant difference exists. The predetermined value is a value which has been set beforehand.

If the proposer 34 has not determined that a significant difference exists (Step S81: NO), the processing of this flow chart is ended. On the other hand, if the proposer 34 has determined that a significant difference exists (Step S81: YES), the proposer 34 generates comparison screen data and proposal data representing an operation which should be performed with respect to the terminal device 10. Thereafter, the notifier 35 notifies the comparison screen data and the proposal data, which have been generated, to the terminal device 10 through the wireless access point 20.

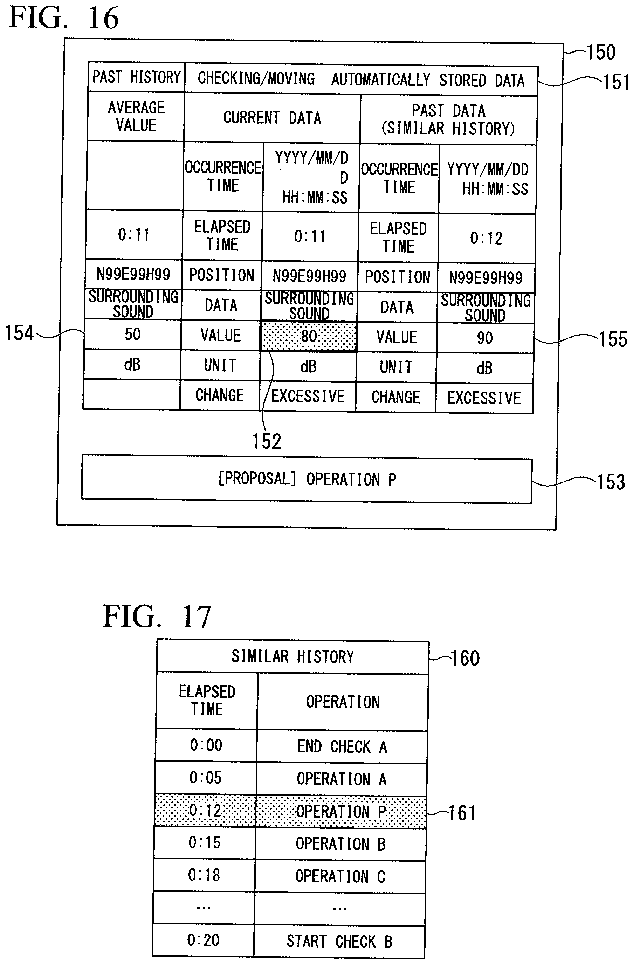

FIG. 16 is a drawing illustrating an example of a comparison screen displayed on the display of the terminal device. As shown in FIG. 16, if the terminal device 10 has received the comparison screen data and the proposal data, the display 15 of the terminal device 10 displays a comparison screen 150 based on the comparison screen data (Step S82). A comparison table 151 is displayed in the comparison screen 150. The comparison table 151 includes an average value of the past historical data 37c, automatically stored current data, and past data similar to the automatically stored current data.

Although a comparison screen 150 of sound data detected by the microphone 11c is shown as an example in FIG. 16, a comparison screen of another environmental value (for example, temperature data, humidity data, smell data, and vibration data) or biological information (for example, heart rate, blood pressure, or perspiration amount) may be displayed on the display 15.

As shown in FIG. 16, when the elapsed time is 11 minutes, the average value of the past historical data 37c is 50 [dB] as shown by the reference sign 154, but the current data is 80 [dB] as shown by the reference sign 152. In this case, since the difference between the average value of the past historical data 37c and the current data is large, there is a possibility that an abnormality has occurred around there.

For this reason, the proposer 34 extracts past data similar to the automatically stored current data out of the past historical data 37c, and displays the extracted data in the comparison table 151 as a similar history. As shown by the reference sign 155, when the elapsed time is 12 minutes, sound data of the similar history is 90 [dB]. The proposer 34 reads, out of the storage 36, the operation historical data of the extracted similar history.

FIG. 17 is a drawing illustrating an example of the operation historical data of the similar history. As shown in FIG. 17, in the operation historical data of the similar history, the operation P was performed 12 minutes after the check for the check target A was completed. For this reason, there is a possibility that the operation P was performed because surrounding sound became large up to 90 [dB]. Therefore, the proposer 34 proposes the operation P as an operation which should be performed with respect to the terminal device 10.

As shown by the reference sign 153 of FIG. 16, the display 15 displays the contents proposed by the proposer 34 based on the proposal data notified from the information processing device 30 (Step S83). In the example of FIG. 16, the operation P is displayed as a proposal. For example, the operation P is a sound recording operation or a check operation of process data. Thereby, a work quality of the plant worker W can be improved in order to find an abnormality of the plant beforehand or early.

Thereafter, the controller 13 of the terminal device 10 detects an operation history after proposal by using the operation detector 11k, and stores the detected operation history into the storage 16 (Step S84). The notifier 12 notifies the operation history after proposal, which has been stored in the storage 16, to the information processing device 30 through the wireless access point 20.

The proposer 34 of the information processing device 30 determines whether or not the worker W performed the proposed operation, based on the operation history after proposal notified by the notifier 12 (Step S85). If the proposer 34 has not determined that the worker W performed the proposed operation (Step S85: NO), the processing of this flow chart is ended. On the other hand, if the proposer 34 has determined that the worker W performed the proposed operation (Step S85: YES), the proposer 34 displays the operation history after proposal on the display 32 of the information processing device 30 (Step S86). Since the operation history screen after proposal which is to be displayed and instructions for correcting the check list data 36c which are to be performed in the operation history screen are the same as that of FIG. 8, the explanation is omitted.

Next, the proposer 34 determines whether the check list data 36c is to be corrected or not (Step S87). If the proposer 34 has not determined that the check list data 36c is to be corrected (Step S87: NO), the processing of this flow chart is ended. On the other hand, if the proposer 34 has determined that the check list data 36c is to be corrected (Step S87: YES), the proposer 34 corrects the check list data 36c (Step S88).

Thus, it is allowed to select whether or not the operation after proposal performed by the plant worker W is added to the check list data 36c. Thereby, the check list data 36c is improvable. However, it is not allowed for the terminal device 10 to select whether or not the operation after proposal is added to the check list data 36c. This is to prevent the plant worker W from correcting the check list data 36c in accordance with individual judgment.

In the present embodiment, the check start notice is notified to the information processing device 30 if the check start key has been selected by the plant worker W, but not limited thereto. For example, the display 15 may display a manual display key for displaying a manual in which procedure of check is described, and the check start notice may be notified to the information processing device 30 if the manual display key has been selected by the plant worker W.

In the present embodiment, although the information processing device 30 is equipped with the proposer 34 and the storage 36, the terminal device 10 may be equipped with the proposer 34 and the storage 36. In this case, the terminal device 10 can perform the proposal processing A to E, without communicating with the information processing device 30.

As described above, the device system 1 of the present embodiment includes the terminal device 10 and the information processing device 30. The terminal device 10 is used by the worker W who checks devices installed in the plant. The information processing device 30 is connectable to the terminal device 10 through the network. The terminal device 10 includes the detector 11 and the notifier 12. The detector 11 detects at least one of data representing an operation performed by the worker W with respect to the terminal device 10, data representing an environmental value of the plant, and data representing biological information of the worker W. The notifier 12 notifies, to the information processing device 30, the historical data 16a and 16b representing the history of the data detected by the detector 11.

Moreover, the information processing device 30 of the present embodiment includes the storage 36 and the proposer 34. The storage 36 stores the historical data 37a, 37b, and 37c representing the history of the data detected by the detector 11 in the past. The proposer 34 proposes an operation which should be performed with respect to the terminal device 10 by using the historical data 16a and 16b notified by the notifier 12 and the historical data 37a, 37b, and 37c stored in the storage 36.

Thereby, if the plant worker P checks a field device, a work quality of the plant worker W can be improved in order to find an abnormality of the plant beforehand or early.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. An information processing device (30) which is connectable through a network to a terminal device (10) used by a worker who checks a device installed in a plant, comprising:
a collector (33) configured to collect, from the terminal device (10), first historical data representing at least one of data representing an operation performed to the terminal device (10) by the worker, data representing an environmental value of the plant, and data representing biological information of the worker;
a storage (36) which stores second historical data representing historical data collected from the terminal device (10) by the collector (33) in the past; and **characterized by** further comprising
a proposer (34) configured to compare the first historical data collected by the collector (33) and the second historical data stored in the storage (36), the proposer (34) being configured to propose an operation which should be performed to the terminal device (10) based on a difference between the first historical data and the second historical data.

2. The information processing device (30) according to claim 1, further comprising:
a notifier (35) configured to notify the operation proposed by the proposer (34) to the terminal device (10).

3. The information processing device (30) according to claim 1,
wherein the proposer (34) is configured to propose an operation which should be performed to the terminal device (10) while the worker checks the device, by using the first historical data from when the worker starts to check the device to when the worker completes to check the device and the second historical data stored in the storage (36).

4. A device system (1) comprising:
a terminal device (10) which is usable by a worker who checks a device installed in a plant; and
the information processing device (30) according to claim 1,
wherein the terminal device (10) comprises:
a detector (11) configured to detect at least one of data representing an operation performed to the terminal device (10) by the worker, data representing an environmental value of the plant, and data representing biological information of the worker; and
a first notifier (12) configured to notify, to the information processing device (30), first historical data representing a history of data currently detected by the detector (11).

5. The device system (1) according to claim 4,
wherein the information processing device (30) further comprises a second notifier (35) configured to notify the operation proposed by the proposer (34) to the terminal device (10), and
wherein the terminal device (10) further comprises a display (15) configured to display the operation notified by the second notifier (35).

6. The device system (1) according to claim 5,
wherein the display (15) is configured to display a comparison screen for comparing the first historical data and the second historical data, and emphasize and display a difference between the first historical data and the second historical data.

7. The device system (1) according to claim 6,
wherein the display (15) is configured to display, in the comparison screen, the first historical data and the second historical data in association with an elapsed time from when the worker starts to check the device.

8. The device system (1) according to any one of claims 4 to 7,
wherein the proposer (34) is configured to propose an operation which should be performed to the terminal device (10) while the worker checks the device, by using the first historical data from when the worker starts to check the device to when the worker completes to check the device and the second historical data stored in the storage (36).

9. The device system (1) according to any one of claims 4 to 8,
wherein the proposer (34) is configured to propose an operation which should be performed to the terminal device (10) while the worker moves to a next device, by using the first historical data from when the worker completes to check the device to when the worker starts to check the next device and the second historical data stored in the storage (36).

10. The device system (1) according to any one of claims 4 to 9,
wherein the second historical data includes third historical data representing data detected by the detector (11) while the device was checked by the worker in the past, and
wherein the proposer (34) is configured to propose an operation which should be performed to the terminal device (10), by using the first historical data notified by the first notifier (12) and the third historical data stored in the storage (36).

11. The device system (1) according to any one of claims 4 to 10,
wherein the second historical data includes fourth historical data representing data detected by the detector (11) while the device was checked by an expert worker different from the worker in the past, and
wherein the proposer (34) is configured to propose an operation which should be performed to the terminal device (10), by using the first historical data notified by the first notifier (12) and the fourth historical data stored in the storage (36).

12. The device system (1) according to claim 4,
wherein the proposer (34) is configured to calculate an average value of the second historical data, and
wherein the proposer (34) is configured to propose an operation which should be performed to the terminal device (10) if a difference between the first historical data and the calculated average value of the second historical data is equal to or more than a predetermined value.

13. The device system (1) according to any one of claims 4 to 11,
wherein the detector (11) is configured to detect an operation history which has been performed to the terminal device (10) after the proposer (34) proposed, and
wherein the first notifier (12) is configured to notify, to the information processing device (30), the operation history after proposal detected by the detector (11).

14. The device system (1) according to claim 13,
wherein the proposer (34) is configured to determine, based on instructions from the worker, whether or not the operation history, which has been performed after the proposer (34) proposed and notified by the first notifier (12), is to be added to a check list data representing check items of check target device.

15. An abnormality determining method for an information processing device (30) which is connectable through a network to a terminal device (10) used by a worker who checks a device installed in a plant, the abnormality determining method comprising:
collecting from the terminal device (10), by a collector (33), first historical data representing at least one of data representing an operation performed to the terminal device (10) by the worker, data representing an environmental value of the plant, and data representing biological information of the worker;
storing, into a storage (36), second historical data representing historical data collected from the terminal device (10) by the collector (33) in the past;
**characterised by** comparing, by a proposer (34), the first historical data collected by the collector (33) and the second historical data stored in the storage (36); and
proposing, by the proposer (34), an operation which should be performed to the terminal device (10) based on a difference between the first historical data and the second historical data.

## Patentansprüche

1. Eine Informationsverarbeitungsvorrichtung (30), die über ein Netzwerk mit einer Terminalvorrichtung (10) verbindbar ist, die von einem Arbeiter verwendet wird, der eine in einer Anlage installierte Vorrichtung überprüft, umfassend:
einen Kollektor (33), der so konfiguriert ist, dass er von der Terminalvorrichtung (10) erste historische Daten sammelt, die mindestens eines von Daten, die einen von dem Arbeiter an der Terminalvorrichtung (10) durchgeführte Arbeitsvorgang repräsentieren, Daten, die einen Umweltwert der Anlage repräsentieren, und Daten, die biologische Informationen des Arbeiters repräsentieren;
einen Speicher (36), der zweite historische Daten speichert, die historische Daten repräsentieren, die in der Vergangenheit von dem Kollektor (33) von der Terminalvorrichtung (10) gesammelt wurden; und
**dadurch gekennzeichnet, dass** es ferner umfasst
einen Vorschlaggerät (34), das so konfiguriert ist, dass es die ersten historischen Daten, die von dem Kollektor (33) gesammelt wurden, und die zweiten historischen Daten, die in dem Speicher (36) gespeichert sind, vergleicht, wobei das Vorschlaggerät (34) so konfiguriert ist, dass es der Terminalvorrichtung (10) einen Arbeitsvorgang vorschlägt, der auf der Grundlage einer Differenz zwischen den ersten historischen Daten und den zweiten historischen Daten durchgeführt werden sollte.

2. Die Informationsverarbeitungsvorrichtung (30) nach Anspruch 1, weiterhin umfassend:
einen Melder (35), der so konfiguriert ist, dass er den von dem Vorschlaggerät (34) vorgeschlagene Arbeitsvorgang der Terminalvorrichtung (10) mitteilt.

3. Die Informationsverarbeitungsvorrichtung (30) nach Anspruch 1,
wobei der Vorschlaggerät (34) konfiguriert ist, um einen Arbeitsvorgang vorzuschlagen, der an der Terminalvorrichtung (10) durchgeführt werden sollte, während der Arbeiter die Vorrichtung prüft, indem die ersten historischen Daten von dem Zeitpunkt, an dem der Arbeiter beginnt, die Vorrichtung zu prüfen, bis zu dem Zeitpunkt, an dem der Arbeiter die Prüfung der Vorrichtung abschließt, und die zweiten historischen Daten, die in dem Speicher (36) gespeichert sind, verwendet werden.

4. Ein Vorrichtungssystem (1), umfassend:
eine Terminalvorrichtung (10), die von einem Arbeiter verwendet werden kann, der eine in einer Anlage installierte Vorrichtung überprüft; und
die Informationsverarbeitungsvorrichtung (30) nach Anspruch 1,
wobei die Terminalvorrichtung (10) umfasst:
einen Detektor (11), der so konfiguriert ist, dass er mindestens eines von Daten erfasst, die einen vom Arbeiter an der Terminalvorrichtung (10) ausgeführten Vorgang repräsentieren, Daten, die einen Umweltwert der Anlage repräsentieren, und Daten, die biologische Informationen des Arbeiters repräsentieren; und
einen ersten Melder (12), der so konfiguriert ist, dass er der Informationsverarbeitungsvorrichtung (30) erste historische Daten meldet, die eine Geschichte von Daten darstellen, die derzeit von dem Detektor (11) erfasst werden.

5. Das Vorrichtungssystem (1) nach Anspruch 4,
wobei die Informationsverarbeitungsvorrichtung (30) ferner einen zweiten Melder (35) umfasst, der so konfiguriert ist, dass er den von dem Vorschlaggerät (34) vorgeschlagene Arbeitsvorgang der Terminalvorrichtung (10) mitteilt, und
wobei die Terminalvorrichtung (10) ferner eine Anzeige (15) aufweist, die so konfiguriert ist, dass sie den durch den zweiten Melder (35) gemeldeten Arbeitsvorgang anzeigt.

6. Das Vorrichtungssystem (1) nach Anspruch 5,
wobei die Anzeige (15) so konfiguriert ist, dass sie einen Vergleichsbildschirm zum Vergleichen der ersten historischen Daten und der zweiten historischen Daten anzeigt und eine Differenz zwischen den ersten historischen Daten und den zweiten historischen Daten hervorhebt und anzeigt.

7. Das Vorrichtungssystem (1) nach Anspruch 6,
wobei die Anzeige (15) so konfiguriert ist, dass sie in dem Vergleichsbildschirm die ersten historischen Daten und die zweiten historischen Daten in Verbindung mit einer verstrichenen Zeit ab dem Zeitpunkt, zu dem der Arbeiter beginnt, die Vorrichtung zu prüfen, anzeigt.

8. Das Vorrichtungssystem (1) nach einem der Ansprüche 4 bis 7,
wobei der Vorschlaggerät (34) konfiguriert ist, um einen Arbeitsvorgang vorzuschlagen, der an der Terminalvorrichtung (10) durchgeführt werden sollte, während der Arbeiter die Vorrichtung prüft, indem die ersten historischen Daten von dem Zeitpunkt, an dem der Arbeiter beginnt, die Vorrichtung zu prüfen, bis zu dem Zeitpunkt, an dem der Arbeiter die Prüfung der Vorrichtung abschließt, und die zweiten historischen Daten, die in dem Speicher (36) gespeichert sind, verwendet werden.

9. Das Vorrichtungssystem (1) gemäß einem der Ansprüche 4 bis 8,
wobei der Vorschlaggerät (34) konfiguriert ist, um einen Arbeitsvorgang vorzuschlagen, der an der Terminalvorrichtung (10) durchgeführt werden sollte, während sich der Arbeiter zu einer nächsten Vorrichtung bewegt, indem die ersten historischen Daten von dem Zeitpunkt, an dem der Arbeiter die Prüfung der Vorrichtung abschließt, bis zu dem Zeitpunkt, an dem der Arbeiter beginnt, die nächste Vorrichtng zu prüfen, und die zweiten historischen Daten, die in dem Speicher (36) gespeichert sind, verwendet werden.

10. Das Vorrichtungssystem (1) nach einem der Ansprüche 4 bis 9,
wobei die zweiten historischen Daten dritte historische Daten enthalten, die Daten darstellen, die von dem Detektor (11) erfasst wurden, während die Vorrichtung in der Vergangenheit von dem Arbeiter überprüft wurde, und
wobei das Vorschlaggerät (34) so konfiguriert ist, dass es der Terminalvorrichtung (10) einen Arbeitsvorgang vorschlägt, der unter Verwendung der ersten vom ersten Melder (12) gemeldeten historischen Daten und der dritten im Speicher (36) gespeicherten historischen Daten durchgeführt werden soll.

11. Das Vorrichtungssystem (1) nach einem der Ansprüche 4 bis 10,
wobei die zweiten historischen Daten vierte historische Daten enthalten, die Daten repräsentieren, die durch den Detektor (11) erfasst wurden, während die Vorrichtung durch einen sachverständigen Arbeiter, der sich von dem Arbeiter unterscheidet, in der Vergangenheit überprüft wurde, und
wobei das Vorschlaggerät (34) so konfiguriert ist, dass es des Terminalvorrichtung (10) einen Arbeitsvorgang vorschlägt, der unter Verwendung der ersten vom ersten Melder (12) gemeldeten historischen Daten und der vierten im Speicher (36) gespeicherten historischen Daten durchgeführt werden soll.

12. Das Vorrichtungssystem (1) nach Anspruch 4,
wobei das Vorschlaggerät (34) konfiguriert ist, um einen Durchschnittswert der zweiten historischen Daten zu berechnen, und
wobei das Vorschlaggerät (34) konfiguriert ist, um einen Arbeitsvorgang vorzuschlagen, der von der Terminalvorrichtung (10) durchgeführt werden sollte, wenn eine Differenz zwischen den ersten historischen Daten und dem berechneten Durchschnittswert der zweiten historischen Daten gleich oder größer als ein vorbestimmter Wert ist.

13. Das Vorrichtungssystem (1) nach einem der Ansprüche 4 bis 11,
wobei der Detektor (11) so konfiguriert ist, dass er eine Arbeitsvorgangshistorie erfasst, die an der Terminalvorrichtung (10) nach dem vorgeschlagenen Vorschlaggerät (34) durchgeführt wurde, und
wobei der erste Melder (12) so konfiguriert ist, dass er der Informationsverarbeitungsvorrichtung (30) die Arbeitsvorgangshistorie nach dem vom Detektor (11) erfassten Vorschlag mitteilt.

14. Das Vorrichtungssystem (1) nach Anspruch 13,
wobei das Vorschlaggerät (34) konfiguriert ist, um auf der Grundlage von Anweisungen von dem Arbeiter zu bestimmen, ob die Arbeitsvorgangshistorie, die durchgeführt wurde, nachdem das Vorschlaggerät (34) vorgeschlagen und durch den ersten Melder (12) benachrichtigt wurde, zu einer Prüfliste mit Daten hinzugefügt werden soll, die Prüfelemente der Prüfzielvorrichtung darstellen.

15. Ein Anomalitätsbestimmungsverfahren für eine Informationsverarbeitungsvorrichtung (30), die über ein Netzwerk mit einer Terminalvorrichtung (10) verbindbar ist, das von einem Arbeiter verwendet wird, der eine in einer Anlage installierte Vorrichtung prüft, wobei das Anomalitätsbestimmungsverfahren umfasst:
Sammeln von der Terminalvorrichtung (10) durch einen Kollektor (33) erster historischer Daten, die mindestens eines von Daten, die einen von dem Arbeiter an der Terminalvorrichtungevorrichtung (10) durchgeführten Arbeitsvorgang repräsentieren, Daten, die einen Umweltwert der Anlage repräsentieren, und Daten, die biologische Informationen des Arbeiters repräsentieren;
Speichern, in einem Speicher (36), von zweiten historischen Daten, die historische Daten repräsentieren, die in der Vergangenheit von der Terminalvorrichtung (10) durch den Kollektor (33) gesammelt wurden;
**gekennzeichnet durch**
Vergleichen der ersten historischen Daten, die von dem Kollektor (33) gesammelt wurden, und der zweiten historischen Daten, die in dem Speicher (36) gespeichert sind, durch ein Vorschlaggerät (34); und
Vorschlagen des Vorschlagenden (34) für einen Arbeitsvorgang, der der Terminalvorrichtung (10) auf der Grundlage einer Differenz zwischen den ersten historischen Daten und den zweiten historischen Daten durchgeführt werden soll.

## Revendications

1. Dispositif de traitement d'informations (30) qui est susceptible d'être connecté par le biais d'un réseau à un dispositif terminal (10) utilisé par un opérateur qui vérifie un dispositif installé dans une installation, comprenant :
un module de collecte (33) configuré pour collecter, à partir du dispositif terminal (10), des premières données historiques représentant au moins l'une parmi des données représentant une opération mise en œuvre sur le dispositif terminal (10) par l'opérateur, des données représentant une valeur environnementale de l'installation, et des données représentant des informations biologiques de l'opérateur ;
une mémoire (36) qui stocke des deuxièmes données historiques représentant des données historiques collectées antérieurement à partir du dispositif terminal (10) par le module de collecte (33); et
**caractérisé en ce qu'**il comprend en outre :
un module de proposition (34) configuré pour comparer les premières données historiques collectées par le module de collecte (33) et les deuxièmes données historiques stockées dans la mémoire (36), le module de proposition (34) étant configuré pour proposer une opération qui doit être mise en œuvre sur le dispositif terminal (10) sur la base d'une différence entre les premières données historiques et les deuxièmes données historiques.

2. Dispositif de traitement d'informations (30) selon la revendication 1, comprenant en outre :
un module de notification (35) configuré pour notifier l'opération proposée par le module de proposition (34) au dispositif terminal (10).

3. Dispositif de traitement d'informations (30) selon la revendication 1,
dans lequel le module de proposition (34) est configuré pour proposer une opération qui doit être mise en œuvre sur le dispositif terminal (10) pendant que l'opérateur vérifie le dispositif, en utilisant les premières données historiques, depuis le moment où l'opérateur commence à vérifier le dispositif jusqu'au moment où l'opérateur achève la vérification du dispositif, et les deuxièmes données historiques stockées dans la mémoire (36).

4. Système de dispositif (1) comprenant :
un dispositif terminal (10) qui est utilisable par un opérateur qui vérifie un dispositif installé dans une installation ; et
le dispositif de traitement d'informations (30) selon la revendication 1 ;
dans lequel le dispositif terminal (10) comprend :
un détecteur (11) configuré pour détecter au moins l'une parmi des données représentant une opération mise en œuvre sur le dispositif terminal (10) par l'opérateur, des données représentant une valeur environnementale de l'installation, et des données représentant des informations biologiques de l'opérateur ; et
un premier module de notification (12) configuré pour notifier, au dispositif de traitement d'informations (30), des premières données historiques représentant un historique de données actuellement détectées par le détecteur (11).

5. Système de dispositif (1) selon la revendication 4,
dans lequel le dispositif de traitement d'informations (30) comprend, en outre, un deuxième module de notification (35) configuré pour notifier l'opération proposée par le module de proposition (34) au dispositif terminal (10) ; et
dans lequel le dispositif terminal (10) comprend, en outre, un écran d'affichage (15) configuré pour afficher l'opération notifiée par le deuxième module de notification (35).

6. Système de dispositif (1) selon la revendication 5,
dans lequel l'écran d'affichage (15) est configuré pour afficher un écran de comparaison pour comparer les premières données historiques et les deuxièmes données historiques, et à mettre en évidence et à afficher une différence entre les premières données historiques et les deuxièmes données historiques.

7. Système de dispositif (1) selon la revendication 6,
dans lequel l'écran d'affichage (15) est configuré pour afficher, dans l'écran de comparaison, les premières données historiques et les deuxièmes données historiques, en association avec un temps écoulé depuis le moment où l'opérateur a commencé à vérifier le dispositif.

8. Système de dispositif (1) selon l'une quelconque des revendications 4 à 7,
dans lequel le module de proposition (34) est configuré pour proposer une opération qui doit être mise en œuvre sur le dispositif terminal (10) pendant que l'opérateur vérifie le dispositif, en utilisant les premières données historiques, depuis le moment où l'opérateur commence à vérifier le dispositif jusqu'au moment où l'opérateur achève la vérification du dispositif, et les deuxièmes données historiques stockées dans la mémoire (36).

9. Système de dispositif (1) selon l'une quelconque des revendications 4 à 8,
dans lequel le module de proposition (34) est configuré pour proposer une opération qui doit être mise en œuvre sur le dispositif terminal (10) pendant que l'opérateur se déplace vers un dispositif ultérieur, en utilisant les premières données historiques depuis le moment où l'opérateur achève la vérification du dispositif jusqu'au moment où l'opérateur commence à vérifier le dispositif successif, et les deuxièmes données historiques stockées dans la mémoire (36).

10. Système de dispositif (1) selon l'une quelconque des revendications 4 à 9,
dans lequel les deuxièmes données historiques comprennent des troisièmes données historiques représentant des données détectées par le détecteur (11) pendant que le dispositif était vérifié par l'opérateur antérieurement ; et
dans lequel le module de proposition (34) est configuré pour proposer une opération qui doit être mise en œuvre sur le dispositif terminal (10), en utilisant les premières données historiques notifiées par le premier module de notification (12) et les troisièmes données historiques stockées dans la mémoire (36).

11. Système de dispositif (1) selon l'une quelconque des revendications 4 à 10,
dans lequel les deuxièmes données historiques comprennent des quatrièmes données historiques représentant des données détectées par le détecteur (11) pendant que le dispositif était vérifié par un opérateur expert, différent de l'opérateur, antérieurement ; et
dans lequel le module de proposition (34) est configuré pour proposer une opération qui doit être mise en œuvre sur le dispositif terminal (10), en utilisant les premières données historiques notifiées par le premier module de notification (12), et les quatrièmes données historiques stockées dans la mémoire (36).

12. Système de dispositif (1) selon la revendication 4,
dans lequel le module de proposition (34) est configuré pour calculer une valeur moyenne des deuxièmes données historiques ; et
dans lequel le module de proposition (34) est configuré pour proposer une opération qui doit être mise en œuvre sur le dispositif terminal (10) si une différence entre les premières données historiques et la valeur moyenne calculée des deuxièmes données historiques est égale ou supérieure à une valeur prédéterminée.

13. Système de dispositif (1) selon l'une quelconque des revendications 4 à 11,
dans lequel le détecteur (11) est configuré pour détecter un historique d'opérations qui a été mis en œuvre sur le dispositif terminal (10) suite à la proposition du module de proposition (34) ; et
dans lequel le premier module de notification (12) est configuré pour notifier, au dispositif de traitement d'informations (30), l'historique d'opérations après une proposition détectée par le détecteur (11).

14. Système de dispositif (1) selon la revendication 13,
dans lequel le module de proposition (34) est configuré pour déterminer, sur la base d'instructions en provenance de l'opérateur, si l'historique d'opérations qui a été mis en œuvre après la proposition du module de proposition (34), et qui a été notifié par le premier module de notification (12), doit être ajouté à des données de liste de vérification représentant des éléments de vérification d'un dispositif cible de vérification.

15. Procédé de détermination d'anomalie pour un dispositif de traitement d'informations (30) qui est susceptible d'être connecté par le biais d'un réseau à un dispositif terminal (10) utilisé par un opérateur qui vérifie un dispositif installé dans une installation, le procédé de détermination d'anomalie comprenant les étapes :
collecter, à partir du dispositif terminal (10), par le biais d'un module de collecte (33), des premières données historiques représentant au moins l'une parmi des données représentant une opération mise en œuvre sur le dispositif terminal (10) par l'opérateur, des données représentant une valeur environnementale de l'installation, et des données représentant des informations biologiques de l'opérateur ;
stocker, dans une mémoire (36), des deuxièmes données historiques représentant des données historiques collectées antérieurement à partir du dispositif terminal (10) par le module de collecte (33) ;
**caractérisé par** les étapes :
comparer, par le biais d'un module de proposition (34), les premières données historiques collectées par le module de collecte (33) et les deuxièmes données historiques stockées dans la mémoire (36) ; et
proposer, par le biais du module de proposition (34), une opération qui doit être mise en œuvre sur le dispositif terminal (10), sur la base d'une différence entre les premières données historiques et les deuxièmes données historiques.
